# EUROPÄISCHE PATENTSCHRIFT

(11) **EP 4 309 233 B1**
(45) Veröffentlichungstag und Bekanntmachung des Hinweises auf die Patenterteilung: **18.06.2025**
(21) Anmeldenummer: 22717114.7
(22) Anmeldetag: 21.03.2022
(51) Int. Cl.: H01M 50/213

(54) **ZELLHALTER ZUM HALTEN VON BATTERIEZELLEN UND ZELLMODUL**
CELL HOLDER FOR HOLDING BATTERY CELLS, AND CELL MODULE
SUPPORT DE CELLULES POUR MAINTENIR DES CELLULES DE BATTERIE ET MODULE DE CELLULES

(30) Priorität: 19.03.2021 DE 102021106892; 27.07.2021 DE 102021119484
(43) Veröffentlichungstag der Anmeldung: 24.01.2024
(73) Patentinhaber: Webasto SE, 82131 Stockdorf (DE)
(72) Erfinder: STOLL, Sebastian, 82131 Stockdorf (DE); SERBAK, Anton, 82131 Stockdorf (DE); BEYER, Hans, 82131 Stockdorf (DE)
(74) Vertreter: Nordmeyer, Philipp Werner
(86) Internationale Anmeldenummer: PCT/EP2022/057313
(87) Internationale Veröffentlichungsnummer: WO 2022/195126

(56) Entgegenhaltungen:
- DE-A1- 102013 207 534
- DE-A1- 102013 207 536
- DE-T5- 112014 004 219

## Beschreibung

### Technisches Gebiet

Die vorliegende Erfindung betrifft einen Zellhalter zum Halten zumindest einer zylindrischen Batteriezelle, vorzugsweise zur Verwendung in einer Traktionsbatterie für Elektro- oder Hybridfahrzeuge oder Fahrzeuge mit Brennstoffzellen, sowie ein Verfahren zur Herstellung eines Zellhalters.

### Stand der Technik

Batteriesysteme für Elektro- und Hybridfahrzeuge sowie Fahrzeuge mit Brennstoffzellen sind Gegenstand aktueller Forschung und Entwicklung. Typischerweise werden mehrere zylindrische Batteriezellen zu einem Batteriemodul, auch als "Batteriepack" bezeichnet, zusammengefasst. Eine Traktionsbatterie für ein Fahrzeug umfasst wiederum ein oder mehrere Batteriemodule.

Ein Batteriemodul weist Zellhalter auf, deren Aufgabe darin besteht, die Batteriezellen mechanisch zu fixieren und so zu einer größeren Einheit, dem Batteriemodul, zusammenzufassen. Die Zellhalter können einteilig oder mehrteilig aus Formteilen aufgebaut sein, oder sie können ganz oder teilweise nach der initialen Platzierung der Batteriezellen zu deren dauerhafter Fixierung im Batteriegehäuse aus Vergussmasse hergestellt werden.

Eine bekannte Bauform nutzt wabenförmige Zellhalter, wie beispielsweise in der US 2010/0136413 A1 beschrieben. Die Batteriezellen sind in diesem Fall parallel zueinander, aufrecht stehend und reihenweise versetzt angeordnet, so dass sie eine Struktur der dichtesten Kreispackung, im Querschnitt zur Längserstreckung der Batteriezellen gesehen, bilden. Gehalten werden die Batteriezellen beidseitig in axialer Richtung durch je einen Zellhalter, der den Batteriezellen entsprechende, becherförmige Vertiefungen aufweist, in welche die Batteriezellen eingesteckt sind.

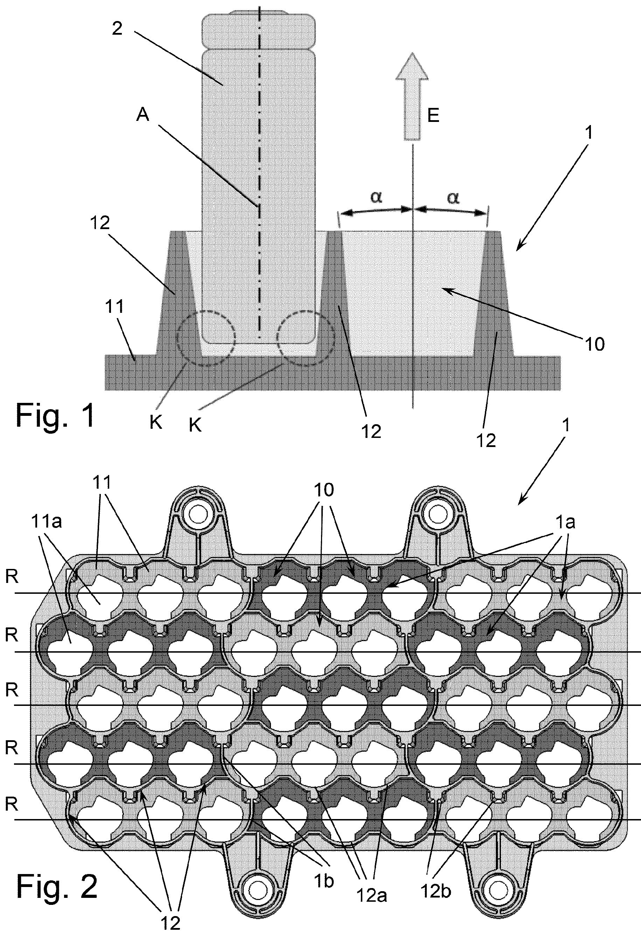

Die Figur 1 zeigt im Querschnitt einen Ausschnitt eines beispielhaften Zellhalters 1 mit becherförmigen Halteabschnitten 10, die durch einen Boden 11 und Seitenwände 12 ausgebildet sind. Die Halteabschnitte 10 sind so eingerichtet, dass sie ein axiales Ende je einer Batteriezelle 2 aufnehmen und in den Richtungen parallel zum Boden 11 sowie auf den Boden 11 gerichtet fixieren. Die Batteriezelle 2 steht im eingebauten Zustand aufrecht, d.h. deren Axialrichtung bzw. Zellachse A steht senkrecht auf dem Boden 11. Durch Anwendung zweier solcher Zellhalter 1, die jeweils ein Ende der Batteriezellen 2 fixieren, werden die Batteriezellen 2 sandwichartig gehalten und bilden so ein Zellmodul bzw. Batteriemodul.

Es ist bekannt, die Zellhalter 1 als Spritzgussteile aus Kunststoff herzustellen. Solche Spritzguss-Zellhalter weisen jedoch sogenannte Entformungswinkel bzw. Entformungsschrägen auf, um leicht aus ihrem Formwerkzeug entformt werden zu können. Zur Illustration sind die Entformungswinkel α, die sich durch eine Verjüngung der Seitenwände 12 ausgehend vom Boden 11 in axialer Richtung manifestieren, in der Figur 1 übertrieben eingezeichnet. Der Zellhalter 1 wird nach Aushärtung des Kunststoffs dem Formwerkzeug (in den Figuren nicht gezeigt) entlang einer Entformungsrichtung E, die parallel zur Zellachse A verläuft, entnommen.

Solche herstellungsbedingten Entformungswinkel stehen einem definierten und flächigen Kontakt der Seitenwände mit den Batteriezellen entgegen. Die Batteriezellen werden durch die Seitenwände tendenziell nur entlang einer Linienkontur gestützt, vgl. Kontaktbereiche K in der Figur 1, nicht jedoch flächig, was eine exakte Positionierung und Ausrichtung, sowie ein sicherer Halt der Batteriezellen erschwert. Dies wirkt sich auch nachteilig auf die Montage aus, die gegebenenfalls mit einer nicht unerheblichen Spielpassung vorgenommen werden muss. Die Schnittstelle zwischen Batteriezellen und Zellhalter ist ferner empfindlich gegenüber Fertigungstoleranzen des Zellhalters und der Batteriezellen. Ein Halteabschnitt, dessen Seitenwände vollständig um die entsprechende Batteriezelle umlaufen, hat generell einen erhöhten Bauraum zur Folge, jedoch insbesondere auch durch die bodenseitige Verdickung aufgrund des Entformungswinkels.

Bei der Anordnung der Batteriezellen ist darauf zu achten, dass zwischen benachbarten Batteriezellen ein ausreichender Abstand eingehalten wird, um bei einem sogenannten "Thermal Runaway" einer Batteriezelle eine thermische Propagation zu benachbarten Zellen zu verhindern und einen Kurzschluss auszuschließen. Zu diesem Zweck ist es üblich, die Zellhalter so zu konzipieren, dass sie einen ausreichenden Abstand zwischen den Batteriezellen sicherstellen. Hierbei bilden die Batteriezellen ein Zellmuster, beispielsweise quadratisch oder hexagonal, bei dem benachbarte Zellen alle den gleichen Abstand zueinander haben.

Allerdings hängt die Wahrscheinlichkeit eines Kurzschlusses zwischen benachbarten Batteriezellen nicht nur vom Abstand sondern auch von deren Verschaltung ab. So ist zwischen benachbarten, elektrisch seriell miteinander verschalteten Batteriezellen ein größerer Abstand einzuhalten als zwischen benachbarten, elektrisch parallel verschalteten Batteriezellen. In der Regel weisen heutige Zellhalter jedoch identische Zellabstände auf, die aus Sicherheitsgründen dann den Anforderungen an den Abstand zweier seriell verschalteter Batteriezellen genügen müssen. Ist die elektrische Verschaltung innerhalb eines Batteriemoduls bekannt und nicht veränderlich, so resultiert daraus eine suboptimale Packungsdichte der Batteriezellen und damit eine suboptimale Energiedichte. Soll der Zellhalter verschiedene elektrische Verschaltungsmuster ermöglichen, so ist die Anzahl der technisch sinnvollen Konfigurationen dennoch begrenzt, sodass auch in diesen Fällen die meisten Zellabstände unnötig groß gehalten werden. Neben der Einbuße an Energiedichte haben größere Zellabstände außerdem einen erhöhten Materialeinsatz beim Zellhalter und ein höheres Gewicht zur Folge.

### Darstellung der Erfindung

Eine Aufgabe der Erfindung besteht darin, einen verbesserten Zellhalter zum Halten zumindest einer zylindrischen Batteriezelle sowie ein verbessertes Zellmodul bereitzustellen.

Die Aufgabe wird durch einen Zellhalter mit den Merkmalen des Anspruchs 1, einen Zellhalter mit den Merkmalen des Anspruchs 8 sowie ein Zellmodul mit den Merkmalen des Anspruchs 13 gelöst. Vorteilhafte Weiterbildungen folgen aus den Unteransprüchen, der folgenden Darstellung der Erfindung sowie der Beschreibung bevorzugter Ausführungsbeispiele.

Der hierin dargelegte Zellhalter dient vorzugsweise zur Verwendung in einer Traktionsbatterie für Elektro- oder Hybridfahrzeuge oder Fahrzeuge mit Brennstoffzellen. Ein Zellmodul bzw. Batteriemodul mit üblicherweise mehreren Batteriezellen kann einen oder zwei Zellhalter aufweisen, um die Batteriezellen zusammenzufassen und zu halten bzw. zu fixieren.

Der Zellhalter gemäß der Erfindung umfasst mehrere Halteabschnitte, die jeweils einen Boden sowie Seitenwände aufweisen und so einen (vorzugsweise konkaven) Abschnitt ausbilden, der eingerichtet ist, um ein axiales Ende je einer Batteriezelle, d.h. eine Grundfläche und zumindest abschnittsweise die Mantelfläche der Batteriezelle, aufzunehmen und zu fixieren. Durch die zylindrische Form der Batteriezelle definiert diese eine Zellachse sowie eine Mantelfläche, die sich entlang der Zellachse sowie in Umfangsrichtung der Batteriezelle erstreckt. Die Batteriezelle wird durch den Zellhalter in zumindest einer Richtung, vorzugsweise jedoch in mehreren Richtungen fixiert. So sind der Boden und die Seitenwände vorzugsweise so eingerichtet, dass sie die entsprechende Batteriezelle in allen Richtungen parallel zum Boden sowie in Richtung auf den Boden zu fixieren.

Aus der DE 10 2013 207 536 A1 ist ein Zellblock mit einer Zellfixierung für eine Batterie bekannt, wobei für jede Öffnung in der Zellfixierung ein Kragen vorgesehen ist, um die jeweilige Batteriezelle zu fixieren.

Die Seitenwände der jeweiligen Halteabschnitte umfassen zumindest eine Kontaktfläche, die in einem Kontaktbereich zur Batteriezelle im Wesentlichen senkrecht zum Boden angeordnet und eingerichtet ist, um bei eingesetzter Batteriezelle mit einem Abschnitt einer Mantelfläche der Batteriezelle in einem flächigen oder linienförmigen Kontakt zu stehen, und zumindest einen verformbaren Kontaktabschnitt, der eingerichtet ist, um sich beim Einstecken der Batteriezelle in den entsprechenden Halteabschnitt zu verformen. Die Kontaktfläche verformt sich hierbei vorzugsweise nicht.

In anderen Worten, die konkav gekrümmte Kontaktfläche stimmt mit einem entsprechenden Abschnitt der Mantelfläche der Batteriezelle überein, so dass es zu einem flächigen Kontakt kommt. An anderer Stelle, vorzugsweise der Kontaktfläche gegenüberliegend, befindet sich der verformbare Kontaktabschnitt. Der Kontaktabschnitt ist vorzugsweise elastisch verformbar, so dass er wie eine Feder wirkt.

Die Kontaktfläche hat vorzugsweise eine zylindrische oder teilzylindrische Form. Es sei darauf hingewiesen, dass die Bezeichnungen "zylindrisch" und "kreisförmig" hierbei keinen vollständigen Zylinderumfang oder Kreis definieren müssen, sondern dass die Kontur eines entsprechenden Segments umfasst ist, da die Kontaktfläche die Batteriezelle nicht vollständig umgibt, sondern nur an einem Teilabschnitt des Batteriezellenumfangs, beispielsweise im Bereich von 20° bis 90°, flächig anliegt.

Der so aufgebaute Zellhalter ist ressourcen- und kosteneffizient herstellbar, da die Geometrien der Halteabschnitte mit den entsprechenden Seitenwänden auf einfache Weise herstellbar sind, etwa durch Spritzguss. Die Halteabschnitte ermöglichen eine exakte Positionierung und Ausrichtung sowie eine definierte mechanische Anbindung der Batteriezelle(n) an den Zellhalter. Die Zellmontage wird durch den verformbaren Kontaktabschnitt erleichtert. Die Halteabschnitte erlauben zudem eine besonders bauraumsparende Anordnung der Batteriezellen direkt nebeneinander, da zwischen den Kontaktbereichen die Mantelfläche einer eingesetzten Batteriezelle frei bleiben kann und nicht vollständig mit Material des Zellhalters umfasst sein muss. Die erzielten Wirkungen sind zudem vergleichsweise unempfindlich gegenüber Fertigungstoleranzen des Zellhalters sowie der Batteriezellen. Durch die Unempfindlichkeit gegenüber schwankenden Zelldurchmessern ist der Zellhalter in der Lage, ohne Modifikation Batteriezellen unterschiedlicher Hersteller zu halten, wodurch Ressourcen und Kosten bei einem etwaigen Wechsel von Batteriezelltypen/-herstellern eingespart werden können.

Vorzugsweise ist die Kontaktfläche an den Boden angebunden, wodurch jener Bereich des entsprechenden Halteabschnitts, der maßgeblich die Position und Ausrichtung der Batteriezelle definiert, besonders stabil ausgebildet ist. Der Boden und die Kontaktfläche sind vorzugsweise einstückig ausgebildet.

Vorzugsweise ist der verformbare Kontaktabschnitt nicht an den Boden angebunden, wodurch die Verformbarkeit auf baulich einfache Weise realisierbar ist.

Vorzugsweise ist die Kontaktfläche in einem Querschnitt parallel zum Boden konkav, insbesondere kreisförmig, gekrümmt, wodurch sie optimal mit einer entsprechend geformten kreiszylindrischen Batteriezelle zusammenwirkt.

Erfindungsgemäß bilden die Kontaktfläche und der verformbare Kontaktabschnitt ohne eingesetzte Batteriezelle einen Winkel ungleich Null, in einem Querschnitt senkrecht zum Boden gesehen. Auf diese Weise lassen Toleranzen ausgleichen und die Fixierung der Batteriezelle verbessern. Ferner fungiert der verformbare Kontaktabschnitt so als Einführfase für eine entsprechende Batteriezelle.

Vorzugsweise umfassen die Halteabschnitte jeweils mehrere, insbesondere genau zwei verformbare Kontaktabschnitte, wodurch die Fixierung und korrekte Ausrichtung der entsprechenden Batteriezelle verbessert und die Halterung stabilisiert werden. Die Merkmale, technischen Wirkungen und Vorteile, die in Bezug auf die Verwendung eines verformbaren Kontaktabschnitts beschrieben wurden, gelten analog für etwaige weitere verformbare Kontaktabschnitte.

Vorzugsweise weist die die Kontaktfläche tragende Seitenwand eines Halteabschnitts einen verformbaren Kontaktabschnitt eines benachbarten Halteabschnitts auf. In anderen Worten, die Kontaktfläche sowie der eine oder mehrere verformbare Kontaktabschnitte eines benachbarten Halteabschnitts sind vorzugsweise einstückig und durch genau ein Strukturteil ausgebildet. Auf diese Weise sind benachbarte Halteabschnitte baulich miteinander integriert, wodurch der Zellhalter besonders kompakt ausbildbar ist.

Vorzugsweise ist der Zellhalter aus Kunststoff hergestellt, insbesondere in einem Spritzgussverfahren. Vorzugsweise ist der Zellhalter einstückig ausgebildet. Der Zellhalter gemäß einer der vorstehend dargelegten Ausführungsvarianten ist als Spritzgussteil besonders geeignet, da dessen strukturelle Beschaffenheit und das Herstellungsverfahren synergetisch zusammenwirken, wie dies aus der Beschreibung des Verfahrens deutlich wird.

Die oben genannte Aufgabe wird ferner durch einen Zellhalter zum Halten zylindrischer Batteriezellen, vorzugsweise zur Verwendung in einer Traktionsbatterie für Elektro- oder Hybridfahrzeuge oder Fahrzeuge mit Brennstoffzellen, gelöst, wobei der Zellhalter aufweist: mehrere Halteabschnitte, die jeweils einen Boden sowie Seitenwände aufweisen und so jeweils einen Abschnitt ausbilden, der eingerichtet ist, um eine Grundfläche und zumindest abschnittsweise eine Mantelfläche je einer Batteriezelle aufzunehmen und zu fixieren; wobei die Halteabschnitte so eingerichtet sind, dass darin eingesetzte Batteriezellen zumindest teilweise unterschiedliche Abstände zu ihren nächsten Nachbarn aufweisen.

Der Zellhalter kann ein oder mehrere der oben definierten Merkmale aufweisen. Die beschriebenen technischen Wirkungen, Vorteile sowie Ausführungsbeispiele gelten dann analog für den vorstehend definierten Zellhalter.

Bei der Bemessung des Abstands wird der kürzeste Abstand zwischen den Mantelflächen der entsprechenden, benachbarten Batteriezellen in einer Schnittebene senkrecht zu den Zellachsen herangezogen. Ferner sei darauf hingewiesen, dass die Halteabschnitte die Position und Ausrichtung der Batteriezellen eindeutig vorgeben, so dass die Batteriezellen im eingesetzten Zustand, insbesondere deren oben definierten Abstände, eine strukturelle Definition der Halteabschnitte implizieren. Zur Abstandsbestimmung benachbarter Batteriezellen wird ein vollständig bestückter Zellhalter angenommen, so dass unterschiedliche Abstände aufgrund von unbesetzten Halteabschnitten ausgeschlossen sind.

Indem der Zellhalter so aufgebaut ist, dass dessen Halteabschnitte unterschiedliche Abstände zwischen den eingesetzten Batteriezellen ermöglichen, kann die Packungsdichte der Batteriezellen im Vergleich zur äquidistanten Zellplatzierung ohne Einbußen bei der Sicherheit optimiert werden. Daraus folgen ein geringerer Materialeinsatz, geringe Kosten und ein geringeres Gewicht des Zellhalters.

Vorzugsweise sind mehrere, beispielsweise drei, Halteabschnitte zu je einer Zellgruppe zusammengefasst, wodurch der Vorteil einer hohen Packungsdichte kombiniert wird mit einem Erhalt der Flexibilität bezüglich der elektrischen Verschaltung.

Vorzugsweise sind benachbarte Zellgruppen mittels einer Gruppenwand voneinander abgegrenzt, wodurch die elektrische Isolation und/oder mechanische Sicherheit erhöht wird. Die Zellgruppen sind somit vorzugsweise durch stabilisierende Stege bzw. Gruppenwände voneinander getrennt. Innerhalb der Zellgruppen befinden sich keine derartigen Gruppenwände. Je nach Anwendung, Material des Zellhalters, Anforderung an die Stabilität und dergleichen können mehr oder weniger Halteabschnitte zu einer Zellgruppe zusammengefasst werden. Eine solche Zusammenfassung wiederum hat eine Material- und Platzeinsparung zur Folge, wodurch die aus den Batteriezellen sowie einem oder zwei der hierin dargestellten Zellhalter aufgebauten Zellmodule besonders kompakt ausgebildet werden können.

Vorzugsweise sind die Halteabschnitte so eingerichtet, dass der Abstand benachbarter Batteriezellen innerhalb einer Zellgruppe kleiner ist als der Abstand benachbarter Batteriezellen benachbarter Zellgruppen.

Aus rein elektrischer Sicht kann im Extremfall zum Erreichen einer maximalen Packungsdichte ein Zellmodul eine gesamte Batteriegruppe (=logische Zelle, Gruppe von parallel verschalteten Batteriezellen) umfassen. Aus mechanischen Gründen wird eine solche Batteriegruppe jedoch vorzugsweise in mehrere Zellgruppen mit entsprechenden Zellwänden unterteilt, was zudem eine Flexibilität bezüglich möglicher elektrischer Verschaltungen erlaubt, ohne hierfür den Aufbau bzw. das Design des Zellhalters ändern zu müssen. Gegenüber einem herkömmlichen Design wird hierbei immer noch eine höhere Packungsdichte bei geringerem Materialeinsatz erreicht, unter Erhaltung einer Flexibilität bezüglich der elektrischen Verschaltung und Sicherheit.

Vorzugsweise sind die Halteabschnitte in Reihen angeordnet, wobei die Halteabschnitte benachbarter Reihen besonders bevorzugt versetzt angeordnet sind, etwa versetzt um die Abmessung eines halben Halteabschnitts. Auf diese Weise lässt sich eine wabenförmige Struktur bzw. eine Struktur der dichtesten Kreispackung herstellen, in einem Querschnitt parallel zum Boden gesehen. Auf diese Weise kann die Anzahl der pro Flächeneinheit untergebrachten Batteriezellen maximiert werden.

Aus dem gleichen Grund sind ein oder mehrere der Halteabschnitte vorzugsweise so ausgebildet, dass deren Seitenwände die Mantelfläche einer entsprechenden eingesetzten Batteriezelle nicht vollständig mit Material umfassen. Die vorstehend beschriebene Gruppierung der Halteabschnitte kann dadurch geschaffen oder zumindest unterstützt werden.

Vorzugsweise liegen die Halteabschnitte je einer Zellgruppe in einer Reihe, d.h. die Zellgruppen überspannen in diesem Fall nicht mehrere Reihen, wodurch ein guter Kompromiss aus Flexibilität der elektrischen Verschaltung sowie mechanischer Stabilität erzielt wird.

Die oben genannte Aufgabe wird ferner durch ein Zellmodul, vorzugsweise zur Verwendung in einer Traktionsbatterie für Elektro- oder Hybridfahrzeuge oder Fahrzeuge mit Brennstoffzellen, gelöst, wobei das Zellmodul aufweist: zumindest einen Zellhalter nach einem der vorstehend beschriebenen Ausführungsvarianten; mehrere Batteriezellen, die jeweils in einen Halteabschnitt des Zellhalters eingesetzt und dadurch fixiert sind; und einen Verschaltungsabschnitt, der die Batteriezellen elektrisch miteinander verbindet. Vorzugsweise weist das Zellmodul zwei Zellhalter auf, welche die Batteriezellen sandwichartig halten.

Die Merkmale, technischen Wirkungen, Vorteile sowie Ausführungsbeispiele, die in Bezug auf die Zellhalter beschrieben wurden, gelten analog für das damit ausgestattete Zellmodul.

Vorzugsweise ist der Verschaltungsabschnitt so eingerichtet, dass Batteriezellen innerhalb einer Zellgruppe parallel verschaltet sind, während Batteriezellen unterschiedlicher Zellgruppen seriell verschaltet sind, wodurch die elektrische und mechanische Sicherheit trotz hoher Packungsdichte gewährleistet sind.

Parallel verschaltete Batteriezellen definieren im Zellmodul jeweils eine Batteriegruppe. Die im Zellmodul vorhandenen Batteriegruppen sind vorzugsweise gleich groß, d.h. sie umfassen die gleiche Anzahl an Batteriezellen. Vorzugsweise ist die Anzahl von Batteriezellen in einer Batteriegruppe durch die Anzahl der Halteabschnitte pro Zellgruppe teilbar, wodurch der Vorteil einer hohen Packungsdichte kombiniert wird mit einem Erhalt der Flexibilität bezüglich der elektrischen Verschaltung.

Gemäß einem konkreten Ausführungsbeispiel umfasst das Zellmodul beispielsweise insgesamt 297 Zellpositionen, orientiert in 11 Reihen und 27 Spalten, wobei drei Batteriezellen reihenweise zu je einer Zellgruppe zusammengefasst sind. Dieser Aufbau erlaubt eine Mehrzahl von Schaltungskonfigurationen. So können die Batteriezellen reihenweise parallel und die Reihen seriell verschaltet werden. Diese Verschaltung sei als "Grundverschaltung" bezeichnet und mit "11s27p" abgekürzt, wobei in der s-p-Nomenklatur "s" für seriell und "p" für parallel steht. Die Grundverschaltung ist bezüglich Busbar-Geometrie und gleichmäßiger Stromverteilung eine bevorzugte Konfiguration. Allerdings erlaubt die Gruppierung der Batteriezellen unter Berücksichtigung des Sicherheitsaspekts, dass eine serielle Verschaltung von Batteriezellen geringen Abstands zu vermeiden ist, weitere Verschaltungsmuster bzw. -konfigurationen.

Ein Zellmodul umfasst vorzugsweise mehrere zylindrische Batteriezellen und zwei Zellhalter, um die Batteriezellen beidseitig in Richtung der Zellachse durch je einen Zellhalter zu halten.

Die oben genannte Aufgabe wird ferner durch ein Verfahren zur Herstellung eines Zellhalters, vorzugsweise zur Verwendung in einer Traktionsbatterie für Elektro- oder Hybridfahrzeuge oder Fahrzeuge mit Brennstoffzellen, gelöst, wobei der Zellhalter eingerichtet ist, um zumindest eine zylindrische Batteriezelle, die eine Zellachse definiert, zu halten. Gemäß dem Verfahren wird der Zellhalter aus einem Kunststoff unter Verwendung eines Formwerkzeugs, das vorzugsweise zwei Werkzeughälften aufweist, spritzgegossen. Im Fall der Verwendung mehrerer Werkzeugteile/Werkzeughälften können diese zum Öffnen des Werkzeugs verfahren, verschwenkt oder auf andere Weise relativ zueinander bewegt werden. In jedem Fall ist der Zellhalter, nachdem der Kunststoff im Formwerkzeug ausreichend ausgehärtet ist, aus dem Formwerkzeug herausnehmbar.

Erfindungsgemäß wird der Zellhalter entlang einer Entformungsrichtung aus dem Formwerkzeug herausgenommen, wobei die Entformungsrichtung und die Zellachse nicht parallel verlaufen.

Indem die Entformungsrichtung und die Zellachse nicht parallel verlaufen, kann der Kontakt zwischen der Batteriezelle und dem Zellhalter verbessert werden, da die für den Spritzguss notwendigen oder üblichen Entformungswinkel keine Qualitätseinbußen mit sich bringen, sondern zur Stabilisierung der Batteriezelle(n) unmittelbar genutzt werden können.

Diese technische Wirkung wird insbesondere bei einem Zellhalter gemäß der obigen Beschreibung erzielt. Die Merkmale, technischen Wirkungen, Vorteile sowie Ausführungsbeispiele, die in Bezug auf den Zellhalter beschrieben wurden, gelten analog für das Verfahren.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: einen Ausschnitt eines herkömmlichen Zellhalters, dargestellt in einem Querschnitt parallel zur Zellachse, mit übertrieben dargestellten Entformungswinkeln und einer Entformungsrichtung parallel zu den Zellachsen;
- Figur 2: eine Draufsicht auf einen Zellhalter mit einer Vielzahl von Halteabschnitten, angeordnet in relativ zueinander versetzten Reihen;
- Figur 3: einen Ausschnitt eines Zellhalters, dargestellt in einem Querschnitt parallel zur Zellachse, dessen Entformungsrichtung nicht parallel zur Zellachse verläuft;
- Figur 4: einen perspektivischen Ausschnitt eines Zellhalters, wobei ein freier und ein mit einer Batteriezelle bestückter Halteabschnitt gezeigt sind;
- Figur 5: einen perspektivischen Ausschnitt eines Halteabschnitts eines Zellhalters, betrachtet schräg in den Halteabschnitt hinein;
- Figur 6: eine Ansicht von unten auf einen Halteabschnitt eines Zellhalters mit eingesetzter Batteriezelle;
- Figur 7: einen perspektivischen Ausschnitt eines Zellhalters gemäß einem weiteren Ausführungsbeispiel;
- Figur 8: einen perspektivischen Ausschnitt des Zellhalters, betrachtet aus einer anderen Perspektive;
- Figur 9: eine Draufsicht auf den Zellhalter;
- Figur 10: eine schematische, qualitative Darstellung einer Gruppierung von Batteriezellen mit unterschiedlichen Abständen;
- Figur 11: eine perspektivische, auseinandergezogene Ansicht eines Zellmoduls in einer Grundverschaltung; und
- Figuren 12a, 12b und 12c: schematische Darstellungen alternativer Verschaltungen.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

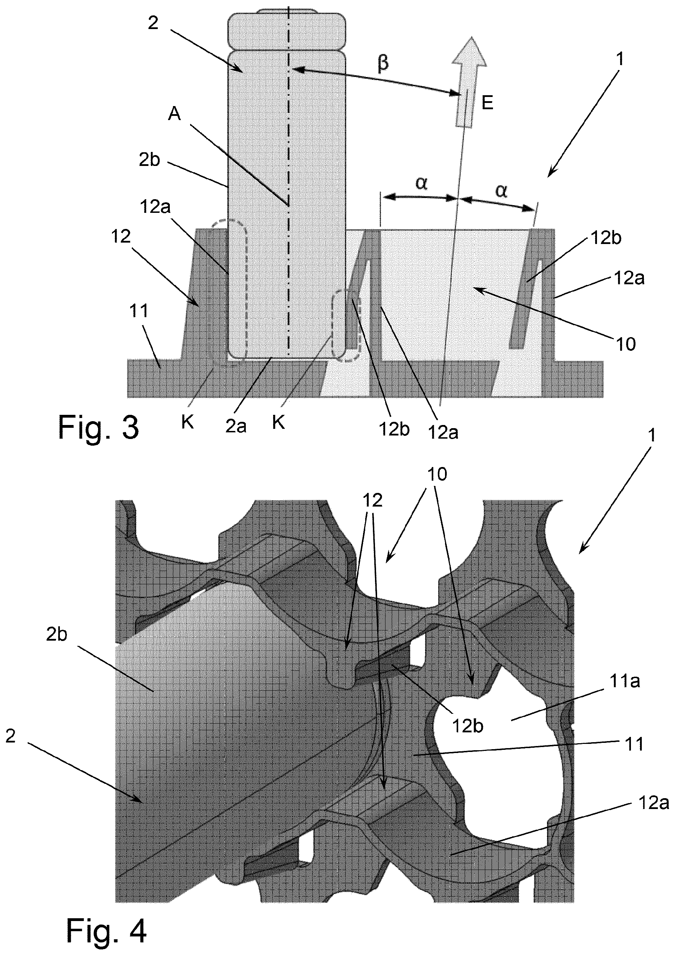

Die Figur 2 ist eine Draufsicht auf einen Zellhalter 1 mit einer Vielzahl von Halteabschnitten 10, die zur Aufnahme zylindrischer Batteriezellen 2, vgl. Figuren 3, 4 und 6, eingerichtet sind. Der Zellhalter 1 ist vorzugsweise aus einem Kunststoff gefertigt, insbesondere im Spritzgussverfahren. Ferner ist der Zellhalter 1 vorzugsweise einstückig oder im Wesentlichen einstückig ausgebildet.

Die Halteabschnitte 10 bilden konkave Abschnitte, d.h. sie sind becherförmig bzw. als Vertiefungen ausgebildet, so dass eines der beiden axialen Enden einer Batteriezelle 2 in einen solchen Halteabschnitt 10 eingesteckt werden kann, wie es besonders deutlich aus den Figuren 3 und 4 hervorgeht.

Die Halteabschnitte 10 sind im vorliegenden Ausführungsbeispiel in Reihen R angeordnet, wobei benachbarte Reihen R um die Abmessung eines halben Halteabschnitts 10 versetzt sind, wodurch sich eine wabenförmige Struktur bzw. eine Struktur der dichtesten Kreispackung ergibt. Auf diese Weise kann die Anzahl der pro Flächeneinheit untergebrachten Batteriezellen 2 maximiert werden. Allerdings können die Halteabschnitte 10 auch auf andere Weise angeordnet sein, beispielsweise ohne Versetzung benachbarter Reihen R.

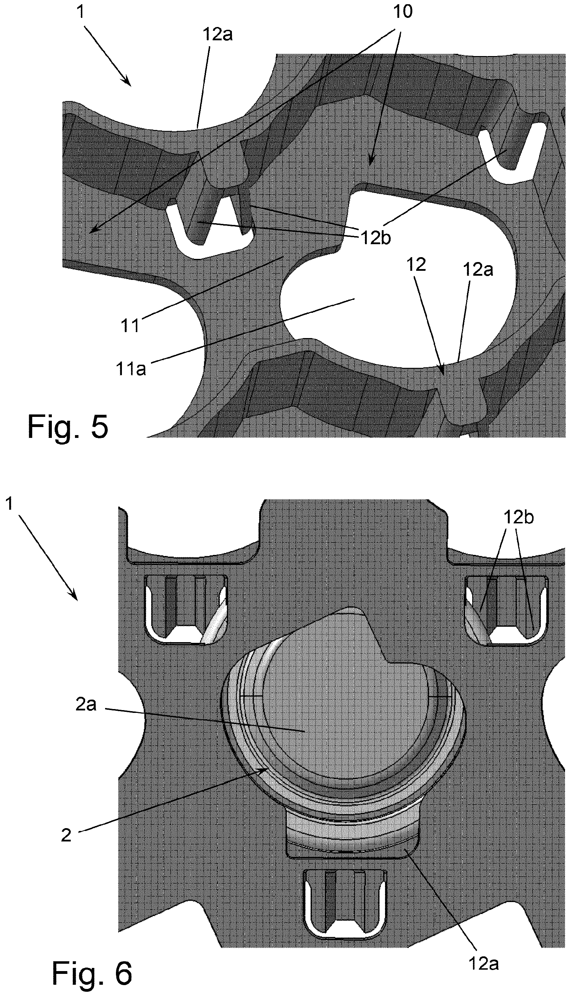

Die Halteabschnitte 10 umfassen einen Boden 11, der bei eingesetzter Batteriezelle 2 mit zumindest einem Teil der entsprechenden Grundfläche 2a der Batteriezelle 2 in Kontakt steht und die Batteriezelle 2 auf diese Weise axial, d.h. entlang der Zellachse A (vgl. Figur 3) fixiert. Es sei darauf hingewiesen, dass die Grundflächen 2a der Batteriezellen 2 keine perfekten Ebenen bilden müssen, sondern Krümmungen, Verformungen und dergleichen in der Axialrichtung A der Batteriezelle 2 aufweisen können, wie es beispielsweise in der Figur 6 angedeutet ist.

Der Boden 11 weist vorzugsweise eine Bodenöffnung 11a auf, die eine großzügige Aussparung sein kann, um eine elektrische Kontaktierung der Batteriezellen 2 zu ermöglichen oder zu erleichtern.

Die Halteabschnitte 10 umfassen ferner Seitenwände 12, die eingerichtet sind, um die Batteriezellen 2 im eingesteckten Zustand in seitlicher Richtung, d.h. senkrecht zur Zellachse A, zu fixieren. Die Seitenwände 12 weisen eine besondere Struktur auf, die den Halt der Batteriezellen 2 verbessert. Eine solche Verbesserung der Schnittstelle zwischen Halteabschnitt 10 und Batteriezelle 2 kann unter Ausnutzung herstellungsbedingter Entformungswinkel α, vgl. Figur 3, erfolgen.

Mit Bezug auf die Figur 3 sei diejenige Richtung, in welcher der Zellhalter 1, sofern er als Spritzgussteil gefertigt wird, dem entsprechenden Formwerkzeug (in den Figuren nicht gezeigt), entnommen wird, als Entformungsrichtung E bezeichnet. Die Entformungsrichtung E und die Zellachse A bilden gemäß dem vorliegenden Ausführungsbeispiel einen von Null verschiedenen Winkel β, der im Fall senkrechtstehender Batteriezellen 2 mit dem Entformungswinkel α übereinstimmt. In anderen Worten, die Entformungsrichtung E und die Zellachse A verlaufen nicht parallel. Indem die Entformungsrichtung E und die Zellachse A nicht parallel verlaufen, kann der Kontakt zwischen der Batteriezelle 2 und den Seitenwänden 12 des entsprechenden Halteabschnitts 10 verbessert werden, wie im Weiteren genauer ausgeführt.

Gemäß dem vorliegenden Ausführungsbeispiel umfassen die Seitenwände 12 eines Halteabschnitts 10 eine Kontaktfläche 12a, die im Wesentlichen senkrecht auf dem Boden 11 steht, an den Boden 11 angebunden sein kann und senkrecht dazu auf eine Weise konkav, insbesondere zylindrisch, gekrümmt ist, dass sie mit einem entsprechenden Abschnitt der Mantelfläche 2b der Batteriezelle 2 übereinstimmt, somit mit der Batteriezelle 2 in einem flächigen Kontakt steht. Vorzugsweise ist die zylindrische Kontaktfläche 12a senkrecht zur Zellachse A kreisförmig gekrümmt, um optimal mit kreiszylindrischen Batteriezellen 2 zusammenzuwirken.

Die Bezeichnungen "zylindrisch" und "kreisförmig" definieren hierbei nicht notwendigerweise einen vollständigen Zylinderumfang oder Kreis. Vielmehr ist die Kontur eines entsprechenden Teilabschnitts, d.h. Segments, umfasst, da die zylindrische Kontaktfläche die Batteriezelle nicht vollständig umgibt, sondern nur an einem Teilabschnitt des Batteriezellenumfangs, beispielsweise im Bereich von 20° bis 90°, flächig anliegt.

Die Seitenwände 12 umfassen je Halteabschnitt 10 ferner einen oder mehrere, vorzugsweise genau zwei, verformbare Kontaktabschnitte 12b. Die verformbaren Kontaktabschnitte 12b werden beim Einstecken der Batteriezelle 2 zumindest teilweise verformt, im Unterschied zur Kontaktfläche 12a, wie es besonders deutlich aus der Figur 3 hervorgeht. Die Kontaktabschnitte 12b sind vorzugsweise elastisch, somit federartig ausgebildet und zu diesem Zweck vorzugsweise nicht oder nicht vollständig an den Boden 11 angebunden. Die verformbaren Kontaktabschnitte 12b können mit der Mantelfläche 2b der Batteriezelle 2 einen flächigen Kontakt oder einen Linienkontakt in axialer Richtung eingehen.

Im unbestückten Zustand, d.h. ohne eingesetzte Batteriezelle 2, bilden die Kontaktfläche 12a und ein entsprechender Kontaktabschnitte 12b vorzugsweise einen von Null verschiedenen Winkel 2α, vgl. Figur 3, wobei α den oben genannten Entformungswinkel bezeichnet. Der Entformungswinkel α definiert eine Verjüngung des Halteabschnitts 10 ausgehend vom Boden 11 in Entformungsrichtung E, der einerseits die Entnahme des Zellhalters 1 aus einem entsprechenden Spritzgusswerkzeug vereinfacht und andererseits durch die Verformbarkeit der Kontaktabschnitte 12b eine zuverlässige Klemmung einer einzusetzenden Batteriezelle 2 bewirkt. Durch die senkrechte Kontaktfläche 12a ist gleichzeitig eine präzise Positionierung und Ausrichtung der Batteriezelle 2 gewährleistet.

Im vorliegenden Ausführungsbeispiel umfassen die Seitenwände 12 je Halteabschnitt 10 eine senkrechte Kontaktfläche 12a sowie zwei gegenüberliegende Kontaktabschnitte 12b. Pro Batteriezelle 2 ergeben sich somit drei Kontaktstellen, wobei zumindest die Kontaktfläche 12a einen flächigen Kontakt verwirklicht. Die Kontaktabschnitte 12b verlaufen vorzugsweise schräg, relativ zur Zellachse A gesehen, so dass sie als Einführfasen für eine entsprechende Batteriezelle 2 fungieren. Die Kontaktabschnitte 12b werden bei der Zellmontage verformt. Sie sind mit üblichen Entformschrägen und aus nur zwei Werkzeughälften durch Spritzguss herstellbar.

Die Kontaktflächen 12a und verformbaren Kontaktabschnitte 12b können baulich miteinander integriert sein, wie es besonders deutlich aus den Figuren 4 und 5 hervorgeht. Die die Kontaktfläche 12a tragende Seitenwand 12 eines Halteabschnitts 10 kann gleichzeitig einen Kontaktabschnitt 12b eines benachbarten Halteabschnitts 10 ausbilden. So befindet sich der Kontaktabschnitt 12b des Halteabschnitts 10 einer bestimmten Reihe R beispielsweise auf Höhe des Scheitelpunkts der Kontaktfläche 12a eines benachbarten Halteabschnitts der Reihe R-1, vgl. auch Figur 3.

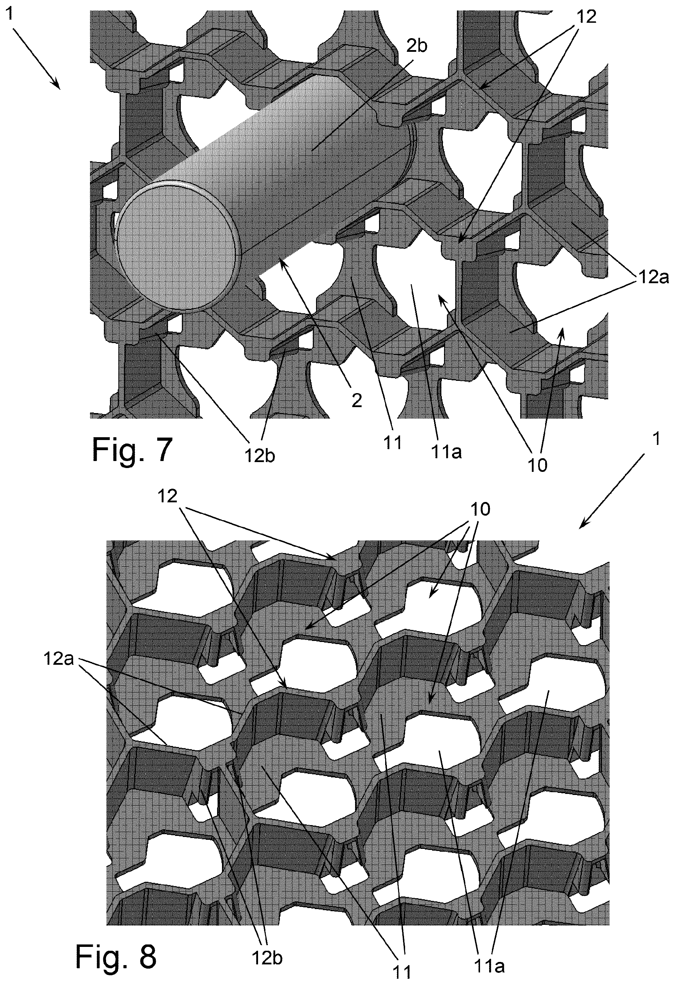

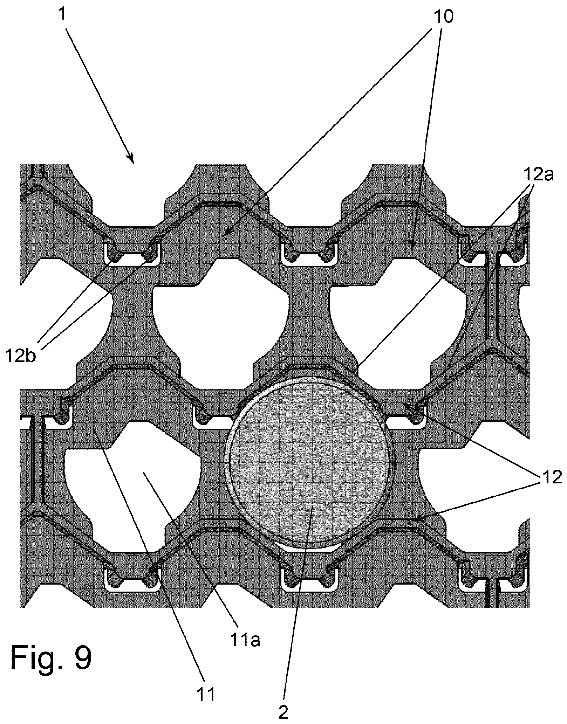

Die Figuren 7 bis 9 zeigen ein weiteres Ausführungsbeispiel, das sich in der Struktur der Kontaktfläche 12a von den vorherigen Ausführungsbeispielen unterscheidet. Während die Kontaktfläche 12a gemäß dem Ausführungsbeispiel der Figuren 2, 4 und 5 zylindrisch gebogen ist (in einem Querschnitt parallel zum Boden 11 gesehen), um einen flächigen Kontakt mit der Mantelfläche 2b der Batteriezelle 2 einzugehen, bilden die Kontaktfläche 12a und die Mantelfläche 2b der Batteriezelle 2 gemäß dem vorliegenden Ausführungsbeispiel an zwei Stellen im Wesentlichen einen Linienkontakt, wie es besonders deutlich aus der Figur 9 hervorgeht. Die Kontaktfläche 12a muss demnach nicht der Krümmung der Batteriezelle 2 entsprechen, sondern kann beispielsweise geradlinig oder polygonartig verlaufen, in einem Querschnitt senkrecht zum Boden 11 gesehen. Auf diese Weise ist der Zellhalter 1 besonders flexibel für Batteriezellen 2 unterschiedlicher Formen und/oder Abmessungen anwendbar.

Die Unterteilung der Seitenwände 12 in eine Kontaktfläche 12a und einen oder mehrere verformbare Kontaktabschnitte 12b hat zur Folge, dass zwischen diesen Kontaktbereichen die Mantelfläche 2b einer eingesetzten Batteriezelle 2 frei bleiben kann und nicht zu 360° vollständig mit Material des Zellhalters 1 umfasst sein muss.

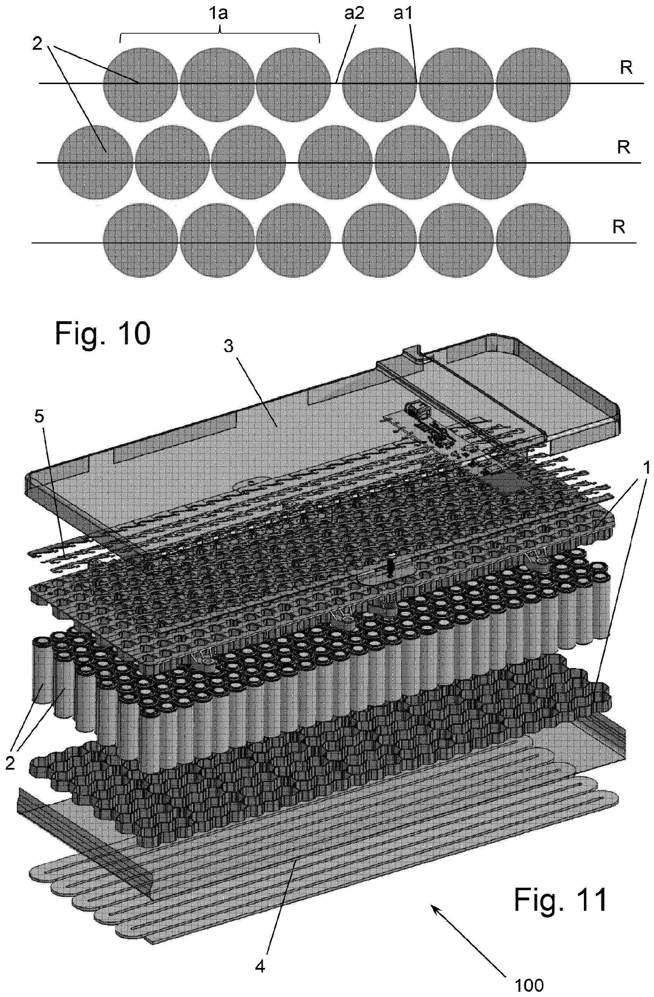

Dadurch lassen sich Zellgruppen 1a aus unmittelbar nebeneinanderliegenden Batteriezellen 2 schaffen. In der Figur 2 sind beispielhaft Zellgruppen 1a aus je drei Halteabschnitten 10 dargestellt. Die Zellgruppen 1a sind durch stabilisierende Stege bzw. Gruppenwände 1b in Richtung der Reihen R voneinander getrennt. Je nach Anwendung, Material des Zellhalters 1, Anforderung an die Stabilität und dergleichen können mehr oder weniger Halteabschnitte 10 zu einer Zellgruppe 1a zusammengefasst werden. Eine solche Zusammenfassung wiederum hat eine Material- und Platzeinsparung zur Folge, wodurch die aus den Batteriezellen 2 sowie einem oder zwei der hierin dargestellten Zellhalter 1 aufgebauten Zellmodule 100 (vgl. Figur 11) besonders kompakt ausgebildet werden können.

Die Batteriezellen 2 einer Zellgruppe 1a sind vorzugsweise elektrisch parallel verschaltet, da hierbei die Mantelflächen 2b der Batteriezellen 2 das gleiche elektrische Potential tragen und sich auch berühren dürften.

Der Zellhalter 1 ist ressourcen- und kosteneffizient herstellbar, da die Geometrien der Halteabschnitte mit den entsprechenden Seitenwänden 12 auf einfache Weise, etwa mittels entsprechender Formwerkzeughälften, spritzgegossen werden können. Die Halteabschnitte 10 ermöglichen eine exakte Positionierung sowie eine definierte mechanische Anbindung der Batteriezellen 2 an den Zellhalter 1. Die Zellmontage wird durch Einführschrägen, gebildet durch die verformbaren Kontaktabschnitt 12b, erleichtert. Der Zellhalter 1 erlaubt die Einhaltung einer konstanten Bauteilwandstärke, was sich vorteilhaft auf die Herstellbarkeit und die zu erreichende Brandschutzklasse auswirkt. Die Halteabschnitte 10 erlauben eine bauraumsparende Anordnung der Batteriezellen 2 direkt nebeneinander. Die erzielten Wirkungen sind zudem vergleichsweise unempfindlich gegenüber Fertigungstoleranzen des Zellhalters 1 sowie der Batteriezellen 2. Durch die Unempfindlichkeit gegenüber schwankenden Zelldurchmessern ist der Zellhalter 1 in der Lage, ohne Modifikation Batteriezellen 2 unterschiedlicher Hersteller zu halten, wodurch Ressourcen und Kosten bei einem etwaigen Wechsel von Batteriezelltypen/-herstellern eingespart werden können.

Zurückkommend auf die mit Bezug auf die Figur 2 beschriebene Gruppierung von Batteriezellen 2, kann die Gruppierung durch unterschiedliche Abstände zwischen benachbarten Batteriezellen 2 innerhalb einer Zellgruppe 1a und benachbarten Batteriezellen 2 benachbarter Zellgruppen 1a verwirklicht werden. Dies ist in der Figur 10 schematisch dargestellt, wobei a1 den gruppeninternen Zellabstand, d.h. Abstand benachbarter Batteriezellen 2 innerhalb einer Zellgruppe 1a, und a2 den gruppenweisen Zellabstand, d.h. Abstand benachbarter Batteriezellen 2 benachbarter Zellgruppen 1a, bezeichnen. Hierbei wird jeweils der kürzeste Abstand zwischen den Mantelflächen 2b der entsprechenden Batteriezellen 2 herangezogen.

Die Dreier-Gruppierung gemäß den Figuren 2 und 10 ist nur beispielhaft, und es können auch mehr oder weniger Batteriezellen 2 zu je einer Zellgruppe 1a zusammengefasst werden. Wenn die Gruppierung durch unterschiedliche Abstände a1, a2 verwirklicht wird, muss der Zellhalter 1 in den Abschnitten größerer Abstände a2 nicht notwendigerweise Stege bzw. Gruppenwände 1b aufweisen, wenngleich dies gemäß der Figur 2 eine bevorzugte Ausführungsvariante ist.

Besonders bevorzugt sind Einheiten von Batteriezellen 2 geringen Abstands a1, d.h. Batteriezellen 2 innerhalb einer Zellgruppe 1a, parallel verschaltet, während Batteriezellen 2 unterschiedlicher Zellgruppen 1a in diesem Fall seriell verschaltet sind. Auf diese Weise wird eine höhere Packungsdichte gegenüber äquidistanter Zellplatzierung ohne Einbußen bei der Sicherheit erreicht.

Die Figur 11 zeigt ein Zellmodul 100 mit zwei Zellhaltern 1 und dazwischen, sandwichartig gehaltenen Batteriezellen 2. Ferner sind ein Gehäuseabschnitt 3, Kühlabschnitt 4 sowie ein Verschaltungsabschnitt 5 dargestellt.

Im Ausführungsbeispiel der Figur 11 umfasst das Zellmodul 100 insgesamt 297 Zellpositionen, orientiert in 11 Reihen R und 27 Spalten, wobei drei Batteriezellen 2 reihenweise zu je einer Zellgruppe 1a zusammengefasst sind. Ferner sind die Batteriezellen 2 reihenweise parallel und die Reihen R seriell verschaltet. Diese Verschaltung sei als "Grundverschaltung" bezeichnet und mit "11s27p" abgekürzt, wobei in der s-p-Nomenklatur "s" für seriell und "p" für parallel steht. Die Grundverschaltung ist bezüglich Busbar-Geometrie, durch den Verschaltungsabschnitt 5 der Figur 11 gezeigt, und gleichmäßiger Stromverteilung eine bevorzugte Konfiguration.

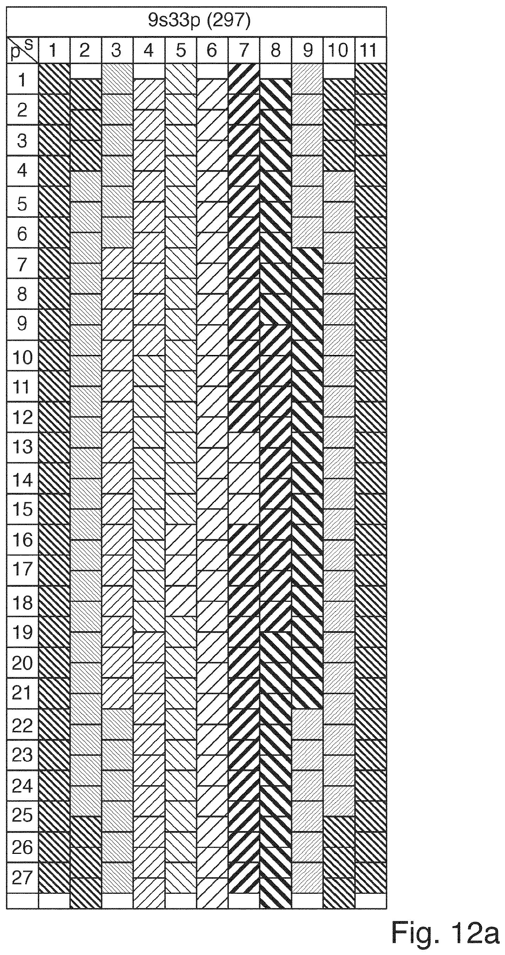

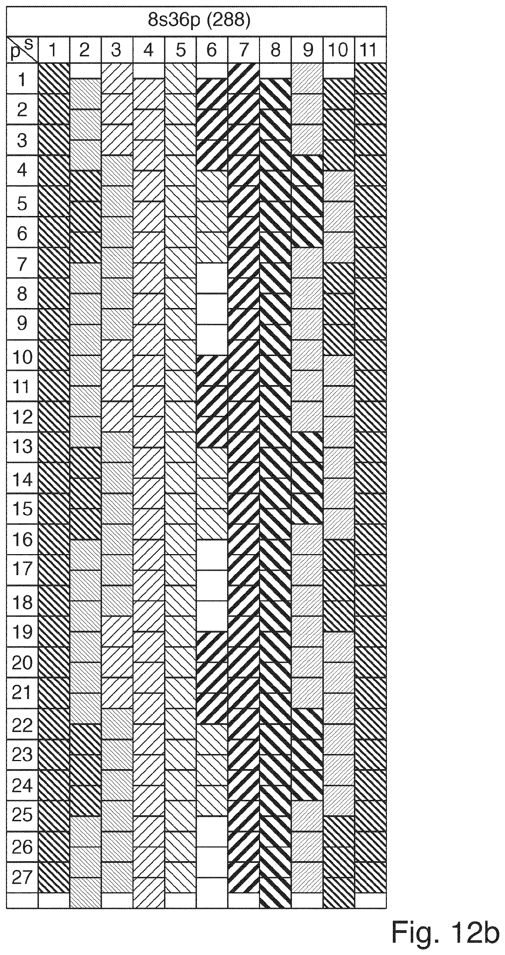

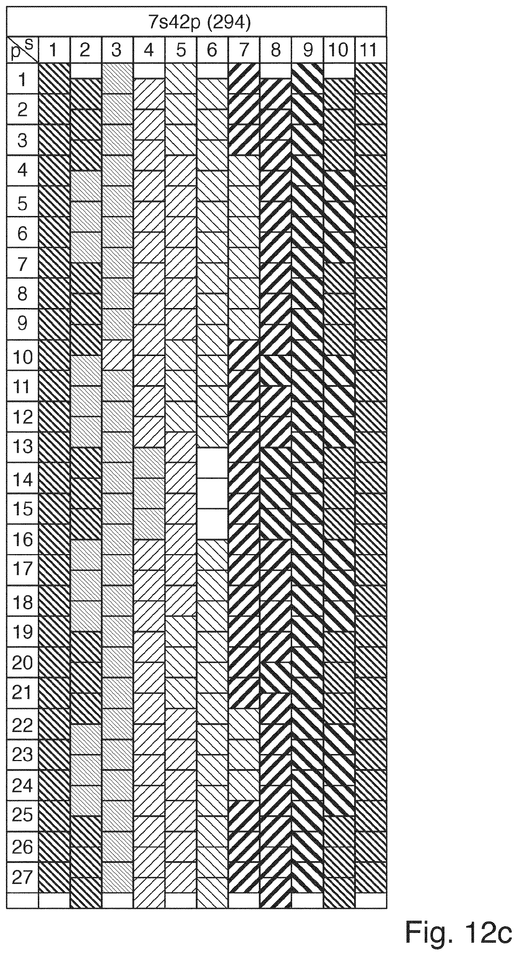

Allerdings erlaubt die Gruppierung der Batteriezellen 2 unter Berücksichtigung des Sicherheitsaspekts, dass eine serielle Verschaltung von Batteriezellen 2 geringen Abstands a1 zu vermeiden ist, weitere Verschaltungsmuster bzw. -konfigurationen. Die Figuren 12a bis 12c zeigen beispielhafte Konfigurationen, die bezüglich Busbar-Geometrie und Stromverteilung sinnvoll darstellbar sind. Hierbei kennzeichnen Felder gleicher Graustufe parallel verschaltete Batteriezellen 2, während Felder unterschiedlicher Graustufen seriell verschaltete Einheiten bilden. Die Zahl in Klammern hinter der s-p-Nomenklatur bezeichnet die Anzahl der tatsächlich mit Batteriezellen 2 besetzten Positionen im Zellmodul 100, mit "u" gekennzeichnete Felder (Figuren 12b und 12c) sind unbesetzt. Die Konfigurationen gemäß den Figuren 11, 12a, 12b, 12c sind nicht vollständig, weitere Varianten sind ebenso denkbar.

Zudem variieren Anzahl und Konfiguration sinnvoller Verschaltungsmuster in Abhängigkeit der Anzahl der zu Zellgruppen 1a zusammengefassten Batteriezellen 2. Aus rein elektrischer Sicht kann im Extremfall zum Erreichen einer maximalen Packungsdichte ein Zellmodul 100 eine gesamte Batteriegruppe (=logische Zelle, Gruppe von parallel verschalteten Batteriezellen 2) umfassen. Aus mechanischen Gründen wird eine solche Batteriegruppe jedoch zumeist in mehrere Zellgruppen 1a unterteilt, was zudem eine Flexibilität bezüglich möglicher elektrischer Verschaltungen erlaubt, ohne hierfür den Aufbau bzw. das Design des Zellhalters 1 ändern zu müssen. Gegenüber einem herkömmlichen Design wird hierbei immer noch eine höhere Packungsdichte bei geringerem Materialeinsatz erreicht, unter Erhaltung einer Flexibilität bezüglich der elektrischen Verschaltung und Sicherheit.

Vorzugsweise ist der Verhaltungsabschnitt 5 so eingerichtet, dass Potentialdifferenzen zwischen benachbarten Batteriezellen, d.h. serielle Verschaltungen, immer nur entlang von Trennwänden, insbesondere Gruppenwänden 1b, auftreten.

Die Anwendung unterschiedlicher Abstände a1, a2 zwischen Batteriezellen 2, insbesondere die Gruppierung der Batteriezellen 2 unter Anwendung von Gruppenwänden 1b, ermöglicht eine Optimierung der Packungsdichte im Vergleich zur äquidistanten Zellplatzierung ohne Einbußen bei der Sicherheit. Daraus folgen ein geringerer Materialeinsatz, geringe Kosten und ein geringeres Gewicht des Zellhalters 1. Ist die Anzahl der Halteabschnitte 10 pro Zellgruppe 1a ein Divisor der Anzahl von Batteriezellen 2 in einer Batteriegruppe, d.h. Gruppe von parallel verschalteten Batteriezellen 2, so wird der Vorteil einer hohen Packungsdichte kombiniert mit einem Erhalt der Flexibilität bezüglich der elektrischen Verschaltung.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Zellhalter
- 1a: Zellgruppe
- 1b: Gruppenwand
- 2: Batteriezelle
- 2a: Grundfläche
- 2b: Mantelfläche
- 3: Gehäuseabschnitt
- 4: Kühlabschnitt
- 5: Verschaltungsabschnitt
- 10: Halteabschnitt
- 11: Boden
- 11a: Bodenöffnung
- 12: Seitenwand
- 12a: Kontaktfläche
- 12b: Verformbarer Kontaktabschnitt
- 100: Zellmodul

- A: Zellachse/Axialrichtung
- E: Entformungsrichtung
- K: Kontaktbereich
- R: Reihe

- α: Entformungswinkel
- β: Winkel
- a1: Gruppeninterner Zellabstand
- a2: Gruppenweiser Zellabstand

## Patentansprüche

1. Zellhalter (1) zum Halten zylindrischer Batteriezellen (2), vorzugsweise zur Verwendung in einer Traktionsbatterie für Elektro- oder Hybridfahrzeuge oder Fahrzeuge mit Brennstoffzellen, wobei der Zellhalter (1) aufweist:
mehrere Halteabschnitte (10), die jeweils einen Boden (11) sowie Seitenwände (12) aufweisen und so jeweils einen Abschnitt ausbilden, der eingerichtet ist, um eine Grundfläche (2a) und zumindest abschnittsweise eine Mantelfläche (2b) je einer Batteriezelle (2) aufzunehmen und zu fixieren; wobei
die Seitenwände (12) der jeweiligen Halteabschnitte (10) umfassen: zumindest eine Kontaktfläche (12a), die in einem Kontaktbereich zur Batteriezelle (2) im Wesentlichen senkrecht zum Boden (11) angeordnet und eingerichtet ist, um bei eingesetzter Batteriezelle (2) mit einem Abschnitt einer Mantelfläche (2b) der Batteriezelle (2) in einem flächigen oder linienförmigen Kontakt zu stehen, und zumindest einen verformbaren Kontaktabschnitt (12b), der eingerichtet ist, um sich beim Einstecken der Batteriezelle (2) in den entsprechenden Halteabschnitt (10) zu verformen,
**dadurch gekennzeichnet, dass**
die Kontaktfläche (12a) und der verformbare Kontaktabschnitt (12b) ohne eingesetzte Batteriezelle (2) einen Winkel ungleich Null bilden.

2. Zellhalter (1) nach Anspruch 1, **dadurch gekennzeichnet, dass** die Kontaktfläche (12a) an den Boden (11) angebunden ist und/oder der verformbare Kontaktabschnitt (12b) nicht oder nicht vollständig an den Boden (11) angebunden ist und/oder die Kontaktfläche (12a) in einem Querschnitt parallel zum Boden (11) konkav gekrümmt verläuft.

3. Zellhalter (1) nach Anspruch 1 oder 2, **dadurch gekennzeichnet, dass** die Kontaktfläche (12a) eine zylindrische oder teilzylindrische Form hat, wobei die zylindrische Kontaktfläche (12a) in einem Querschnitt parallel zum Boden (11) vorzugsweise kreisförmig gekrümmt ist.

4. Zellhalter (1) nach einem der vorigen Ansprüche, **dadurch gekennzeichnet, dass** die Halteabschnitte (10) jeweils genau zwei verformbare Kontaktabschnitte (12b) umfasst.

5. Zellhalter (1) nach einem der vorigen Ansprüche, **dadurch gekennzeichnet, dass** die die Kontaktfläche (12a) tragende Seitenwand (12) eines Halteabschnitts (10) einen verformbaren Kontaktabschnitt (12b) eines benachbarten Halteabschnitts (10) aufweist.

6. Zellhalter (1) nach einem der vorigen Ansprüche, **dadurch gekennzeichnet, dass** ein oder mehrere der Halteabschnitte (10) so ausgebildet sind, dass deren Seitenwände (12) die Mantelfläche (2b) einer entsprechenden eingesetzten Batteriezelle (2) nicht vollständig mit Material umfassen.

7. Zellhalter (1) nach einem der vorigen Ansprüche, **dadurch gekennzeichnet, dass** die Halteabschnitte (10) so eingerichtet sind, dass darin eingesetzte Batteriezellen (2) zumindest teilweise unterschiedliche Abstände (a1, a2) zu ihren nächsten Nachbarn aufweisen.

8. Zellhalter (1) nach einem der vorigen Ansprüche, **dadurch gekennzeichnet, dass** mehrere, vorzugsweise drei, Halteabschnitte (10) zu je einer Zellgruppe (1a) zusammengefasst sind, wobei benachbarte Zellgruppen (1a) vorzugsweise mittels einer Gruppenwand (1b) voneinander abgegrenzt sind.

9. Zellhalter (1) nach Anspruch 8, **dadurch gekennzeichnet, dass** die Halteabschnitte (10) so eingerichtet sind, dass der Abstand (a1) benachbarter Batteriezellen (2) innerhalb einer Zellgruppe (1a) kleiner ist als der Abstand (a2) benachbarter Batteriezellen (2) benachbarter Zellgruppen (1a).

10. Zellhalter (1) nach einem der vorigen Ansprüche, **dadurch gekennzeichnet, dass** die Halteabschnitte (10) in Reihen (R) angeordnet sind, wobei die Halteabschnitte (10) benachbarter Reihen (R) versetzt angeordnet sind, vorzugsweise versetzt um die Abmessung eines halben Halteabschnitts (10).

11. Zellhalter (1) nach Anspruch 8 oder 9 und Anspruch 10, **dadurch gekennzeichnet, dass** die Halteabschnitte (10) je einer Zellgruppe (1a) in einer Reihe (R) liegen.

12. Zellmodul (100), vorzugsweise zur Verwendung in einer Traktionsbatterie für Elektro- oder Hybridfahrzeuge oder Fahrzeuge mit Brennstoffzellen, wobei das Zellmodul (100) aufweist:
zumindest einen Zellhalter (1) nach einem der vorigen Ansprüche;
mehrere Batteriezellen (2), die jeweils in einen Halteabschnitt (10) des Zellhalters (1) eingesetzt und dadurch fixiert sind; und
einen Verschaltungsabschnitt (5), der die Batteriezellen (2) elektrisch miteinander verbindet.

13. Zellmodul (100) nach Anspruch 12 und Anspruch 8, **dadurch gekennzeichnet, dass** der Verschaltungsabschnitt (5) so eingerichtet ist, dass Batteriezellen (2) innerhalb einer Zellgruppe (1a) parallel verschaltet sind, während Batteriezellen (2) unterschiedlicher Zellgruppen (1a) seriell verschaltet sind.

14. Zellmodul (100) nach Anspruch 13, **dadurch gekennzeichnet, dass** parallel verschaltete Batteriezellen (2) im Zellmodul (100) jeweils eine Batteriegruppe definieren und die Anzahl von Batteriezellen (2) in einer Batteriegruppe durch die Anzahl der Halteabschnitte (10) pro Zellgruppe (1a) teilbar ist.

## Claims

1. Cell holder (1) for holding cylindrical battery cells (2), preferably for use in a traction battery for electric or hybrid vehicles or vehicles with fuel cells, wherein the cell holder (1) has:
multiple holding portions (10) which in each case have a bottom (11) and side walls (12) and thus in each case form a portion which is configured to receive and to fix a base (2a) and, at least sectionally, a lateral surface (2b) of a respective battery cell (2); wherein
the side walls (12) of the respective holding portions (10) comprise: at least one contact surface (12a) which is arranged in a region of contact with the battery cell (2) substantially perpendicularly to the bottom (11) and is configured such that, with a battery cell (2) inserted, it is in areal or linear contact with a portion of a lateral surface (2b) of the battery cell (2), and at least one deformable contact portion (12b) which is configured to deform when the battery cell (2) is plugged into the corresponding holding portion (10),
**characterized in that**,
without a battery cell (2) inserted, the contact surface (12a) and the deformable contact portion (12b) form a non-zero angle.

2. Cell holder (1) according to Claim 1, **characterized in that** the contact surface (12a) is attached to the bottom (11) and/or the deformable contact portion (12b) is not or not completely attached to the bottom (11) and/or the contact surface (12a) is concavely curved in a cross section parallel to the bottom (11).

3. Cell holder (1) according to Claim 1 or 2, **characterized in that** the contact surface (12a) has a cylindrical or partially cylindrical shape, wherein the cylindrical contact surface (12a) is preferably circularly curved in a cross section parallel to the bottom (11).

4. Cell holder (1) according to one of the preceding claims, **characterized in that** the holding portions (10) in each case comprise exactly two deformable contact portions (12b).

5. Cell holder (1) according to one of the preceding claims, **characterized in that** the side wall (12) of a holding portion (10) bearing the contact surface (12a) has a deformable contact portion (12b) of a neighbouring holding portion (10).

6. Cell holder (1) according to one of the preceding claims, **characterized in that** one or more of the holding portions (10) are formed in such a way that the side walls (12) thereof do not completely surround the lateral surface (2b) of a corresponding inserted battery cell (2) with material.

7. Cell holder (1) according to one of the preceding claims, **characterized in that** the holding portions (10) are configured in such a way that at least some battery cells (2) inserted therein are at different distances (a1, a2) from their nearest neighbours.

8. Cell holder (1) according to one of the preceding claims, **characterized in that** multiple, preferably three, holding portions (10) are combined to form a respective cell group (1a), wherein neighbouring cell groups (1a) are preferably separated from one another by means of a group wall (1b).

9. Cell holder (1) according to Claim 8, **characterized in that** the holding portions (10) are configured in such a way that the distance (a1) between neighbouring battery cells (2) within a cell group (1a) is smaller than the distance (a2) between neighbouring battery cells (2) of neighbouring cell groups (1a).

10. Cell holder (1) according to one of the preceding claims, **characterized in that** the holding portions (10) are arranged in rows (R), wherein the holding portions (10) of neighbouring rows (R) are arranged in an offset manner, preferably in a manner offset by the dimension of half a holding portion (10).

11. Cell holder (1) according to Claim 8 or 9 and Claim 10, **characterized in that** the holding portions (10) of a respective cell group (1a) are situated in a row (R).

12. Cell module (100), preferably for use in a traction battery for electric or hybrid vehicles or vehicles with fuel cells, wherein the cell module (100) has:
at least one cell holder (1) according to one of the preceding claims;
multiple battery cells (2) which are in each case inserted into a holding portion (10) of the cell holder (1) and thus fixed; and
an interconnection portion (5) which electrically connects the battery cells (2) to one another.

13. Cell module (100) according to Claim 12 and Claim 8, **characterized in that** the interconnection portion (5) is configured in such a way that battery cells (2) within a cell group (1a) are interconnected in parallel while battery cells (2) of different cell groups (1a) are interconnected in series.

14. Cell module (100) according to Claim 13, **characterized in that** battery cells (2) in the cell module (100) that are interconnected in parallel in each case define a battery group and the number of battery cells (2) in a battery group is divisible by the number of holding portions (10) per cell group (1a).

## Revendications

1. Support de cellules (1) pour maintenir des cellules de batterie (2) cylindriques, destiné à être utilisé de préférence dans une batterie de traction pour des véhicules électriques ou hybrides, ou des véhicules équipés de piles à combustible, le support de cellules (1) comprenant :
une pluralité de parties de maintien (10) comprenant chacune un fond (11) et des parois latérales (12) et formant ainsi chacune une partie qui est conçue pour recevoir et fixer une surface de base (2a) et, au moins partiellement, une surface d'enveloppe (2b) de chaque cellule de batterie (2) ;
les parois latérales (12) des parties de maintien (10) respectives comprenant : au moins une surface de contact (12a) qui est agencée dans une zone de contact avec la cellule de batterie (2) sensiblement perpendiculaire au fond (11) et pour être en contact plan ou linéaire avec une partie de la surface d'enveloppe (2b) de la cellule de batterie (2) lorsque la cellule de batterie (2) est mise en place, et au moins une partie de contact déformable (12b) qui est conçue pour se déformer lors de l'insertion de la cellule de batterie (2) dans la partie de maintien (10) correspondante,
**caractérisé en ce que**
la surface de contact (12a) et la partie de contact déformable (12b) forment un angle non nul sans cellule de batterie (2) insérée.

2. Support de cellules (1) selon la revendication 1, **caractérisé en ce que** la surface de contact (12a) est reliée au fond (11) et/ou la partie de contact déformable (12b) n'est pas, ou n'est pas complètement, reliée au fond (11) et/ou la surface de contact (12a) s'étend de manière incurvée et concave dans une section transversale parallèle au fond (11).

3. Support de cellules (1) selon la revendication 1 ou la revendication 2, **caractérisé en ce que** la surface de contact (12a) présente une forme cylindrique ou partiellement cylindrique, la surface de contact cylindrique (12a) étant de préférence incurvée de manière circulaire dans une section transversale parallèle au fond (11).

4. Support de cellules (1) selon l'une des revendications précédentes, **caractérisé en ce que** les parties de maintien (10) comprennent chacune exactement deux parties de contact déformables (12b).

5. Support de cellules (1) selon l'une des revendications précédentes, **caractérisé en ce que** la paroi latérale (12) d'une partie de maintien (10) portant la surface de contact (12a) comprend une partie de contact déformable (12b) d'une partie de maintien (10) voisine.

6. Support de cellule (1) selon l'une des revendications précédentes, **caractérisé en ce qu'**une ou plusieurs des parties de maintien (10) sont conçues de telle sorte que leurs parois latérales (12) n'entourent pas complètement la surface d'enveloppe (2b) d'une cellule de batterie (2) insérée correspondante.

7. Support de cellules (1) selon l'une des revendications précédentes, **caractérisé en ce que** les parties de maintien (10) sont conçues de telle sorte que les cellules de batterie (2) insérées en elles comprennent au moins partiellement des distances (a1, a2) différentes par rapport à leurs voisines les plus proches.

8. Support de cellules (1) selon l'une des revendications précédentes, **caractérisé en ce que** plusieurs, de préférence trois, parties de maintien (10) sont regroupées en un groupe de cellules (1a), les groupes de cellules (1a) voisins étant de préférence séparés les uns des autres par une paroi de groupe (1b).

9. Support de cellules (1) selon la revendication 8, **caractérisé en ce que** les parties de maintien (10) sont agencées de telle sorte que la distance (a1) entre des cellules de batterie (2) voisines à l'intérieur d'un groupe de cellules (1a) est inférieure à la distance (a2) entre des cellules de batterie (2) voisines de groupes de cellules (1a) voisins.

10. Support de cellules (1) selon l'une des revendications précédentes, **caractérisé en ce que** les parties de maintien (10) sont agencées en rangées (R), les parties de maintien (10) de rangées (R) voisines étant décalées, de préférence d'une demi-partie de maintien (10).

11. Support de cellules (1) selon la revendication 8 ou la revendication 9 et la revendication 10, **caractérisé en ce que** les parties de maintien (10) se trouvent chacune dans un groupe de cellules (1a) d'une rangée (R).

12. Module de cellules (100), de préférence destiné à être utilisé dans une batterie de traction pour véhicules électriques ou hybrides ou pour des véhicules équipés de piles à combustible, le module de cellules (100) comprenant :
au moins un support de cellules (1) selon l'une des revendications précédentes ;
une pluralité de cellules de batterie (2) qui sont chacune insérées dans une partie de maintien (10) du support de cellules (1) et qui sont, ainsi, fixées ; et
une partie de câblage (5) qui relie électriquement les cellules de batterie (2) les unes aux autres.

13. Module de cellules (100) selon la revendication 12 et la revendication 8, **caractérisé en ce que** la partie de câblage (5) est conçue de telle sorte que les cellules de batterie (2) d'un groupe de cellules (1a) sont câblées en parallèle, tandis que les cellules de batterie (2) de différents groupes de cellules (1a) sont câblées en série.

14. Module de cellules (100) selon la revendication 13, **caractérisé en ce que** les cellules de batterie (2) montées en parallèle dans le module de cellules (100) définissent chacune un groupe de batteries, et **en ce que** le nombre de cellules de batterie (2) dans un groupe de batteries est divisible par le nombre de parties de maintien (10) par groupe de cellules (1a).
